Europäisches Patentamt

European Patent Office

Office européen des brevets

(11) Publication number: **0 270 115**
**A2**

## EUROPEAN PATENT APPLICATION

(21) Application number: 87117902.4

(22) Date of filing: 03.12.87

(51) Int. Cl.⁴ **C08G 18/22** , **C08G 18/65** ,
**C08G 18/73** , **C08G 18/10**

(30) Priority: 05.12.86 US 938222

(43) Date of publication of application:
08.06.88 Bulletin 88/23

(84) Designated Contracting States:
BE DE ES FR GB IT NL SE

(71) Applicant: THE DOW CHEMICAL COMPANY
2030 Dow Center Abbott Road P.O. Box 1967
Midland, MI 48640(US)

(72) Inventor: Efford, Elizabeth Anne
4301 Alcosta Place
Pittsburg California 94565(US)

(74) Representative: Henkel, Feiler, Hänzel &
Partner
Möhlstrasse 37
D-8000 München 80(DE)

(54) Process for preparing static dissipative linear segmented polyurethanes.

㊄ This invention is an improvement in a process for preparing an static dissipative phase-segregated polyurethane polymer wherein a polyfunctional polyether and a chain extender are reacted with an organic polyisocyanate in the presence of 500 to 10,000 parts per million metal tetraorganoboron salt, based on the weight of the polyurethane. The improvement comprises dissolving said tetraorganoboron salt in all or a portion of said chain extender prior to contacting said chain extender with said polyfunctional polyether and said polyisocyanate.

This process provides a phase-segregated polyurethane having excellent static dissipative properties.

EP 0 270 115 A2

# PROCESS FOR PREPARING STATIC DISSIPATIVE LINEAR SEGMENTED POLYURETHANES

This invention relates to static dissipative phase-segregated thermoplastic polyurethanes.

Phase-segregated polyurethanes are useful in a variety of applications such as blood bags, catheters and other medical uses, as well as for films, and packaging. Because of their excellent physical properties, they would also be excellent packaging materials for materials such as electronics components. However, electronics components and similar materials are often quite sensitive to damage from static electrical discharges, and their packaging must usually have the ability to dissipate static charges. Previously known phase-segregated polyurethanes have not had the requisite static dissipative behavior.

It has recently been discovered that the incorporation of certain ionizable salts into the polyurethane could improve its static dissipative properties. However, it has been found that in many instances, the salts are not compatible with the polyurethane. This causes difficulties in making the polyurethane and results in the polyurethane having static dissipative properties which are less than anticipated. This problem is overcome in some instances with the use of an enhancer compound, which compatibilizes the salt with the polymer and enhances the static dissipative effect of the salt. However, the use of the enhancer in some instances causes undesirable changes in the physical properties of the polyurethane.

It would be desirable to provide a process whereby a phase-segregated polyurethane having excellent static decay properties is prepared.

This invention is directed to a process for preparing a static dissipative phase-segregated polyurethane polymer comprising reacting a polyfunctional polyether containing repeating oxyethylene units, a chain extender and an organic polyisocyanate in the presence of 500 to 10,000 parts per million of metal tetraorganoboron salt, based on the weight of the polyurethane said process characterized by dissolving said tetraorganoboron salt in all or a porition of said chain extender prior to reacting said ingredients.

This process provides a phase-segregated polyurethane having excellent static dissipative properties. A major advantage of this process is that when the tetraorganoboron salt is incorporated into the polyurethane in this manner, it is more uniformly distributed than with other processes, thereby providing more effective static dissipative properties per given quantity of tetraorganoboron salt. As a result, surprisingly good static dissipative properties are obtained with very low amounts of tetraorganoboron salt.

According to this invention, an static dissipative polyurethane is prepared by reacting a polyether polyol, a polyisocyanate and a chain extender in the presence of a monovalent metal tetraorganoboron salt which is previously dissolved in all or a portion of the chain extender.

The polyether polyol employed herein advantageously has an equivalent weight from 700 to 3000, preferably 800 to 2000. It is advantageously prepared by polymerizing ethylene oxide with a $C_3$ to $C_6$ $\alpha,\beta$-alkylene oxide, tetrahydrofuran, or other cyclic compound capable of undergoing a ring-opening reaction in the presence of a polyhydric initiator to form a polyether. Preferably, a $C_2$ to $C_4$ alkylene oxide, is copolymerized with ethylene oxide to form a random interpolymer or a block copolymer. Most preferably, the polyether polyol is formed by polymerizing propylene oxide in the presence of a polyhydric initiator, and then reacting this product with a small quantity of ethylene oxide (i.e., 8 to 25 percent of the total weight of the polyol) to provide a significant quantity of terminal primary hydroxyl groups to the polyether. If the polyether polyol is a polymer of a $C_4$ or higher cyclic compound, it advantageously contains 20 to 50%, based on the weight of the polyol, of repeating units derived from ethylene oxide.

Suitable polyhydric initiators have from 2 to 8, preferably 2 to 4, active hydrogen atoms per molecule. Suitable dihydric initiators include water, ethylene glycol, diethylene glycol, triethylene glycol, propylene glycol, dipropylene glycol, tripropylene glycol, methyldiethanolamine, ethyldiethanolamine, methyldipropanolamine, ethyldipropanolamine, and low equivalent weight polypropylene oxide glycols. Mixtures of these initiators can be used. Trihydric initiators include glycerine, trimethylolpropane, ammonia, triethanolamine, and triisopropanolamine. Other, higher functional initiators include ethylene diamine, pentaerythritol, sucrose, and sorbitol.

It is further within the scope of this invention to employ a minor amount of a poly(ethylene oxide) in conjunction with a copolymer of ethylene oxide and a $C_3$ to $C_6$ cyclic ether in order to improve the performance of the tetraorganoboron salt. When such poly(ethylene oxide) polymer is used, it advantageously constitutes 5 to 25 percent of the total weight of the polyethers employed.

Both aliphatic and aromatic polyisocyanates are useful in this invention. However, certain salts of the tetraorganoboron tend to catalyze the trimerization reaction of more reactive polyisocyanates. For this reason, aliphatic polyisocyanates are generally preferred, particular with respect to the linear segmented polyurethanes (LSPs) described hereinafter.

Suitable aromatic polyisocyanates include, for example, m-phenylene diisocyanate, p-phenylene diisocyanate, 2,4-and/or 2,6-toluene diisocyanate (TDI), naphthylene-1,5-diisocyanate, 1-methoxyphenyl-2,4-diisocyanate, 4,4'-biphenylene diisocyanate, 3,3'-dimethoxy-4,4'-biphenyldiisocyanate, 2,4'-and/or 4,4'-diphenylmethanediisocyanate (MDI) and derivatives thereof. Preferred among the aromatic polyisocyanates are the isomers of TDI and MDI.

Exemplary aliphatic polyisocyanates include isophorone diisocyanate, cyclohexane diisocyanate, hydrogenated diphenylmethanediisocyanate (H$_{12}$ MDI), and 1,6-hexamethylenediisocyanate. Of these, isophorone diisocyanate and H$_{12}$ MDI are most preferred

Biuret, urethane, urea and/or carbodiimide containing derivatives of the foregoing polyisocyanates are also suitable.

Suitable chain extenders include relatively low equivalent weight compounds (less than 250 equivalent weight) having at least two active hydrogen-containing groups per molecule. Preferably, the chain extender has 2 to 3, more preferably 2, active hydrogen-containing groups per molecule. Most preferably, the chain extender is cyclohexanedimethanol or an $\alpha, \omega$ -alkylene glycol or glycol ether having an equivalent weight of less than 200. Particularly preferred chain extenders include ethylene glycol, diethylene glycol, 1,4-butanediol, triethylene glycol, and cyclohexanedimethanol.

In all or a portion of the chain extender is dissolved a monovalent metal tetraorganoboron salt. Preferably, the monovalent metal is an alkali metal and more preferably, it is sodium or potassium. The anion is preferably tetraalkylboron or tetraphenylboron. When a tetraalkylboron anion is used, the alkyl groups are preferably unsubstituted or inertly substituted C$_1$ to C$_6$ alkyl groups. The alkali metal tetraphenylboron salts are particularly preferred, and sodium tetraphenylboron is the most preferred salt. The tetraorganoboron salt is used in an amount to provide 500 to 10,000, preferably 1000 to 7500, parts by weight of the salt per million parts polymer.

As mentioned before, the tetraorganoboron salt can be dissolved in all of the chain extender. However, it is often more convenient to prepare and use a stock tetraorganoboron salt/chain extender solution and supplement this solution as needed by adding additional chain extender to the polyurethane formulation. In practice, this permits the ready preparation of polyurethanes having varying amounts of chain extender and tetraorganoboron salt without preparing multiple solutions. Typically, such stock solution contains from 2 weight percent tetraorganoboron salt up to the limit of solubility of the salt in the chain extender. Preferably, the chain extender solution contains 3 to 50, more preferably 5 to 25 percent by weight tetraorganoboron salt.

The polyurethane can be prepared from the foregoing reactive components in either a one-shot process or by the two-shot, or prepolymer, process.

In the one-shot process, the polyisocyanate is simultaneously reacted with the polyether polyol and the chain extender. In such one-shot process, it is conventional to mix together all the reactive components, and additives as described hereinafter, except the polyisocyanate, and then react said mixture with the polyisocyanate. This permits the introduction of only two streams of material to the mold or reaction vessel. Occasionally, certain of the nonreactive additives may be mixed with the polyisocyanate. Alternatively, the various components may all be separately introduced in the mold or reaction vessel, or may be added in three or more streams.

In the two-shot process, all or a major portion of the polyether polyol is reacted with an excess of polyisocyanate in a first step to form a prepolymer or quasi-prepolymer. This prepolymer or quasi-prepolymer is then reacted with the chain extender, and any remaining polyether polyol, if any, to form the polyurethane polymer. A stoichiometric excess of the polyisocyanate is used in making the prepolymer or quasi-prepolymer. Advantageously, the resulting prepolymer or quasi-prepolymer has an isocyanate equivalent weight from 250 to 600, more preferably 250 to 450.

The reaction of the polyisocyanate and the polyether polyol is advantageously conducted at an elevated temperature in the presence of a catalyst as described hereinafter. The preparation of the prepolymer is advantageously conducted at a temperature of 60 to 100°C for a time sufficient for substantially all of the active hydrogen-containing groups to react with the polyisocyanate. From 3 minutes to 5 hours are generally sufficient for this purpose.

The resulting prepolymer or quasi-prepolymer is then reacted with the chain extender, which contains the dissolved tetraorganoboron salt. Additional amounts of the polyether polyol may also be present during this reaction, but such amounts are minor compared with the amount of polyether polyol used in preparing the prepolymer. This reaction is advantageously catalyzed, and carried out at an elevated temperature, such as 25 to 100, preferably 30 to 80°C. The reaction of the prepolymer or quasi-prepolymer with the chain extender is typically carried out in a mold or an extruder. In order to maximize the use of the mold, it is common practice to cure the polyurethane in the mold only until it is sufficiently cured to maintain its shape. At that point, the typical practice is to demold the polyurethane and post-cure it outside of the mold.

3

Such post-curing, when done, is typically conducted for 30 minutes to 24 hours at a temperature of 40 to 120°C. Such post-curing is not critical, however, and complete in-mold curing or room temperature post-cures may also be used.

As mentioned before, the various reactions between the isocyanate-reactive components and the polyisocyanate are advantageously catalyzed. Preferred catalysts include organometallic catalysts, especially organotin catalysts, and tertiary amine compounds. The preferred organotin catalysts include, for example, stannous octoate, dimethyltindilaurate, and dibutyltindilaurate. Suitable amine catalysts include triethylenediamine. From 0.0001 to 0.5 part of the organometallic catalyst is advantageously used per 100 parts of reactive components. Tertiary amine catalysts are suitably employed in an amount from 0.01 to 2 parts per 100 parts of reactive components. Of course, other catalysts useful in catalyzing polyurethane reactions are also useful herein.

In addition to the foregoing components, other optional additives may be used in preparing the polyurethane. When a cellular polyurethane is desired, a blowing agent is advantageously incorporated into the reaction mixture. Such blowing agents include air, nitrogen, carbon dioxide, water, halogenated methanes such as methylene chloride, dichlorodifluoromethane, and the so-called "azo" blowing agents. Typically, a silicone or other surfactant is used in conjunction with the blowing agent to stabilize the foaming reaction mixture until it is sufficiently cured to maintain its cellular configuration. Preferably, the polyurethane is non-cellular or microcellular, having a density of 0.85 g/cc or higher.

Other optional additives include pigments, fillers, reinforcing fibers, mold release agents, antioxidants, and preservatives.

A polyurethane of particular interest is a linear segmented polyurethane (LSP). Such LSPs are prepared by reacting a substantially difunctional polyether polyol, preferably of 800 to 2500 equivalent weight, with a substantially difunctional polyisocyanate and a substantially difunctional chain extender. The polyether polyol is most preferably a poly(propylene oxide) diol, especially one which is end-capped with ethylene oxide to provide a substantial proportion of primary hydroxyl groups. The polyisocyanate is preferably aliphatic, with hydrogenated MDI and isophorone diisocyanate being especially preferred. Ethylene glycol and 1,4-butanediol are the most preferred chain extenders. Such LSPs, and methods for their production, are described in U. S. Patent No. 4,621,113.

The static dissipative polyurethane of this invention is useful in many applications in which the dissipation of static electrical charges is desired. For the purposes of this invention, a polyurethane is "static dissipative" if it is capable of dissipating an applied static charge of ±5000 volts in less than 10 seconds. Preferably, it dissipates such a charge in less than 2 seconds. Such static dissipative polyurethanes are useful, for example, in electronics components packaging, electronics cabinets, shoe soles, and carpet backings.

The following examples are provided to illustrate the invention and not to limit the scope thereof. All parts and percentages are by weight unless otherwise indicated.

Example 1

A solution of sodium tetraphenylboron in ethylene glycol is prepared by degassing and dewatering ethylene glycol at 90°C for two hours at a pressure of less than 800 millitorr absolute. Sufficient sodium tetraphenylboron is added to the degassed ethylene glycol to make a 10% by weight solution. The solution is then degassed as before. The resulting solution is kept under a nitrogen pad.

A linear segmented polyurethane (LSP) is prepared by charging 356 grams of a 2000 molecular weight ethylene oxide-capped poly(propylene oxide) (Polyol A) to a suitable reactor and heating it, open to the air, until it becomes water-white in appearance. The polyol is then dewatered at 135°C for one hour at a pressure of less than 800 millitorr absolute. To the hot, degassed polyol are added 240.6 grams of a hydrogenated MDI. The vacuum is reapplied and the mixture cooled to 65°C, at which time 32 microliters of stannous octoate are added. The temperature of the mixture rises upon addition of the stannous octoate. After 30 minutes, the reaction mixture is cooled to 65°C, and 130 grams of the resulting prepolymer are removed. To the remaining prepolymer are added 2.5 grams of Irganox 1076, a commercially available antioxidant, followed by degassing. The mixture is then cooled to below 40°C, and 25 grams of the sodium tetraphenylboron/ethylene glycol solution are added, followed by degassing. After cooling to 30°C, 10 grams of ethylene glycol are added, again followed by degassing. 225 microliters of stannous octoate are added, and mixture stirred until the exotherm reaches 50°C. The reaction mixture is then poured into polypropylene pans to depths of 1 mm. and 9 mm. and sealed with aluminum foil. The pourings are cured overnight at 100°C. The resulting static dissipative LSP, referred to herein as Sample No. 1, contains 5000 parts per million sodium tetraphenylboron.

Sample Nos. 2-4 are prepared in like manner, except the amounts of ethylene glycol and sodium tetraphenylboron solution are varied to provide LSPs having sodium tetraphenylboron levels of 3000 ppm, 1000 ppm and 500 ppm, respectively.

The ability of each of these Samples to dissipate a static charge is measured on an Electrotech Systems 406C static decay meter. The sample is conditioned at < 15% relative humidity for at least 24 hours prior to testing. Each Sample is placed into the meter at 22°C and charged to +5000 VDC at 14% relative humidity. The time required for the sample to dissipate 99% of this charge is measured. The shorter the time required, the better the ability of the sample to dissipate the charge, and the better the static dissipative character of the sample. The results of this testing are indicated in Table 1 following.

## TABLE 1

| Sample No. | Thickness, mm. | Amount Na(Ph)4B, ppm | Decay Time,sec. |
|---|---|---|---|
| 1 | 1 | 5000 | 0.40 |
| 1 | 9 | 5000 | 0.11 |
| 2 | 1 | 3000 | 1.53 |
| 2 | 9 | 3000 | 0.16 |
| 3 | 1 | 1000 | 3.2 |
| 3 | 9 | 1000 | 0.42 |
| 4 | 1 | 500 | 6.05 |

As can be seen from the data in Table 1, excellent static dissipative properties are provided at low levels of sodium tetraphenylboron.

### Example 2

A solution of sodium tetraphenylboron is prepared by dissolving 14.33 grams of sodium tetraphenylboron into 500 g of degassed 1,4-butanediol.

Static dissipative linear segmented polyurethane No. 5 is prepared by blending together 1601.7 grams of Polyol A and 376.8 grams of a 488 equivalent weight polyester polyol (Polyol B), and heating under vacuum at 135°C in the presence of air until the blend is water-white. The blend is cooled to 80°C, and 1732.7 grams of $H_{12}$ MDI and 0.21 cc of a catalyst solution as described in Example 1 are added, followed by heating at above 65°C for one-half hour. A 130-gram portion of the resulting prepolymer is then removed. The remaining prepolymer is heated to 65°C, blended with 20 grams of the antioxidant described in Example 1, and the mixture degassed. After cooling to 30°C, 430.8 grams of the sodium tetraphenylboron solution are added, followed by degassing. Then, 1.8 grams of the catalyst solution are added and the mixture stirred until it reaches a temperature of 50°C, poured into pans and cured as described in Example 1. The resulting static dissipative LSP is tested for static decay time as described in Example 1. It requires 0.83 seconds for a 1 mm. film to dissipate 99% of an applied static charge of 5000 volts direct current. A 9 mm. film dissipates a like charge in 0.08 seconds.

Sample No. 5 is repeated, this time using Polyol A and Polyol B in a 0.6:0.4 molar proportion (Sample No. 6). Sample No. 6, as a 1 mm. film, dissipates 99% of an applied 5000 VDC charge in 0.48 seconds. As a 9 mm. film, it dissipates the charge in 0.08 seconds.

Example 3

Using the general procedure described in Example 2, static dissipative LSP Sample No. 7 is prepared from Polyol A, MDI and 1,4-butanediol at a molar ratio of 1:4.12:3. Sample No. 7 is formulated with 1000 ppm of sodium tetraphenylboron which is dissolved in the 1,4-butanediol prior to its reaction with the prepolymer. As a 1 mm. film, Sample No. 7 dissipates 99% of a 5000 VDC charge in 0.05 seconds. As a 9 mm. film, it dissipates the charge in 0.01 second.

Example 4

Using the general procedure described in Example 2, static dissipative LSP Sample No. 8 is prepared from Polyol A, a 600 molecular weight poly(ethylene oxide) glycol, H$_{12}$ MDI and 1,4-butanediol in a 0.9:0.1:4.12:3 molar ratio. In making this sample, Polyol A and the poly(ethylene oxide) glycol are blended and used to make the prepolymer. Sample No 8 is formulated with 3000 ppm of sodium tetraphenylboron which is dissolved in the 1,4-butanediol prior to its reaction with the prepolymer. As a 1 mm. film, Sample No. 8 exhibits a static decay time of 0.31 seconds.

Claims

1. A process for preparing a static dissipative phase-segregated polyurethane polymer comprising reacting a polyfunctional polyether containing repeating oxyethylene units, a chain extender and an organic polyisocyanate in the presence of 500 to 10,000 parts per million of metal tetraorganoboron salt based on the weight of the polyurethane, said process characterized by dissolving said tetraorganoboron salt in all or a portion of said chain extender prior to reacting said ingredients.

2. The process of claim 1 wherein the tetraorganoboron salt is a tetraphenylboron salt.

3. The process of claim 1 wherein said chain extender is an $\alpha, \omega$-alkylene glycol or glycol ether.

4. The process of claim 1 wherein said polyether is substantially difunctional with an equivalent weight of 800 to 2500.

5. The process of claim 1 wherein said polyisocyanate is a substantially difunctional aliphatic diisocyanate.

6. The process of claim 1 wherein said polyether and polyisocyanate are reacted in a first step to form an isocyanate-terminated prepolymer or quasi-prepolymer, and said prepolymer or quasi-prepolymer is subsequently reacted with said chain extender to form the polyurethane polymer.

7. The process of claim 1 comprising reacting in a first step a substantially difunctional polyether having an equivalent weight of 800 to 2500 and an excess of an aliphatic diisocyanate to form an isocyanate terminated prepolymer or quasi-prepolymer and subsequently reacting said prepolymer or quasi-prepolymer with an $\alpha, \omega$-alkylene glycol or glycol ether extender having dissolved therein sufficient tetraphenylboron salt to provide said 500 to 10,000 parts per million thereof in said polyurethane polymer.

8. The process of claim 7 wherein both steps are conducted at an elevated temperature in the presence of an organotin and/or tertiary amine catalyst.

9. The process of claim 8 wherein said chain extender comprises ethylene glycol or 1,4-butanediol and said polyether is an ethylene oxide-capped poly(propyleneoxy)glycol.

10. The process of claim 9 wherein the tetraorganoboron salt comprises sodium tetraphenylboron.